# EUROPÄISCHE PATENTSCHRIFT

(11) **EP 1 066 176 B1**
(45) Veröffentlichungstag und Bekanntmachung des Hinweises auf die Patenterteilung: **22.05.2002**
(21) Anmeldenummer: 99922037.9
(22) Anmeldetag: 18.03.1999
(51) Int. Cl.: B60R 21/00

(54) **VERFAHREN ZUR DATENÜBERTRAGUNG IN EINEM ÜBER EINE BUSLEITUNG VERNETZTEN RÜCKHALTESYSTEM**
METHOD FOR DATA TRANSFER IN A RESTRAINT SYSTEM CONNECTED TO A BUS LINE
PROCEDE DE TRANSFERT DE DONNEES DANS UN SYSTEME DE RETENUE INTERCONNECTE PAR UNE LIGNE DE BUS

(30) Priorität: 28.03.1998 DE 19813923
(43) Veröffentlichungstag der Anmeldung: 10.01.2001
(73) Patentinhaber: ROBERT BOSCH GMBH, 70442 Stuttgart (DE); Conti Temic microelectronic GmbH, 90411 Nürnberg (DE)
(72) Erfinder: NITSCHKE, Werner, D-71254 Ditzingen (DE); KARL, Otto, D-71229 Leonberg (DE); BAUER, Joachim, D-71720 Oberstenfeld-Prevorst (DE); BISCHOFF, Michael, D-85111 Adelschlag (DE); FENDT, Günter, D-86529 Schrobenhausen (DE); RINKENS, Johannes, D-85055 Ingolstadt (DE); SCHÄFFER, Stefan, D-86529 Schrobenhausen (DE)
(86) Internationale Anmeldenummer: DE9900757
(87) Internationale Veröffentlichungsnummer: WO9950100

(56) Entgegenhaltungen:
- EP-A- 0 788 929
- DE-A- 3 506 118
- DE-A- 3 811 217
- DE-A- 19 519 130
- DE-A- 19 546 359

## Beschreibung

### Stand der Technik

Die vorliegende Erfindung betrifft ein Verfahren zur Datenübertragung in einem über eine Busleitung vernetzten Rückhaltesystem für Fahrzeuginsassen, wobei an die Busleitung eine zentrale Steuereinheit und mehrere Datenverarbeitungseinheiten angekoppelt sind, welche zur Ansteuerung von Rückhalteeinrichtungen an verschiedenen Orten im Fahrzeug vorgesehen sind, und wobei die zentrale Steuereinheit an alle oder einzelne Datenverarbeitungseinheiten Abfrage- oder Steuersignale in Form von Datentelegrammen aussendet und die Datenverarbeitungseinheiten auf vorgegebene Abfrage- oder Steuersignale Antwortsignale an die zentrale Steuereinheit zurücksenden.

Die Leistungsfähigkeit der Rückhaltesysteme in Fahrzeugen wird künftig stark zunehmen, um den Schutz der Fahrzeuginsassen weiter zu verbessern. Das bedeutet, daß die Zahl der Rückhalteeinrichtungen und deren zugehörige Auslösemittel im Fahrzeug drastisch ansteigen wird. Zu diesen Rückhaltesystemen gehören dann z. B. mehrstufig zündbare Airbags für Fahrer und Beifahrer, Kniebags für Fahrer und Beifahrer, Seitenairbags für Fahrer, Beifahrer und Fond-Insassen, wobei Seitenairbags sowohl für den Kopfals auch Thoraxbereich vorgesehen werden können. Gurtstrammer, die auch mehrstufig aktivierbar sind, eventuell auch Überrollbügel usw.. Es wird also für jeden Fahrzeuginsassen ein komplexes Schutzsytem, das aus mehreren Rückhalteeinrichtungen besteht, im Fahrzeug installiert sein.

In den Conference Proceedings des SAE International Congress & Exposition, 24. bis 27.02.1997, Detroit wird in dem Beitrag "Bussystem zur Vernetzung von Aktuatoren für Rückhaltesysteme" von J. Bauer, G. Mehler, W. Nitschke ein komplexes Rückhaltesystem beschrieben. Durch Einführung eines Bussystems, das alle Rückhalteeinrichtungen miteinander vernetzt, konnten voluminöse Kabelbäume eingespart werden. Für jede Rückhalteeinrichtung ist bei diesem bekannten System eine Datenverarbeitungseinheit vorgesehen, die im wesentlichen eine Recheneinheit, Dateneingangs- und Ausgangsschaltungen, eine Speichereinheit, eine Zeit- und Taktbasis und eine Stromversorgung aufweist. Diese auch als periphere intelligente Zündendstufe bezeichnete Datenverarbeitungseinheit ist in unmittelbarer Nähe des zu der jeweiligen Rückhalteeinrichtung gehörenden Auslösemittels, nämlich in einem Zündpillenstecker oder auf einem Substrat der Zündpille selbst angeordnet.

Von einer zentralen Steuereinheit aus erhält jede Datenverarbeitungseinheit über eine Busleitung ihre Versorgungsenergie. Außerdem ermittelt die zentrale Steuereinheit anhand mehrerer Sensorsignale - z.B. von Beschleunigungssensoren, Precrashsensoren, Sitzbelegungssensoren - welche Rückhalteeinrichtungen auszulösen sind. Dementsprechend adressiert die zentrale Steuereinheit mit Hilfe eines über die Busleitung übertragenen Datentelegramms die betroffenen Datenverarbeitungseinheiten. Auch Diagnoseanforderungen gehen von der zentralen Steuereinheit aus über die Busleitung an die einzelnen Datenverarbeitungseinheiten, welche ihre Diagnoseantworten wiederum an die zentrale Steuereinheit über den Bus zurücksenden. Diese Diagnoseabfragen werden ebenfalls in Form eines Datentelegramms über die Busleitung ausgesendet. Dieses Datentelegramm beginnt mit einem Startbit, darauf folgen mehrere Bits zur Adressierung der angesprochenen Datenverarbeitungseinheit und Informationsbits. Ein Prüfbit und ein Stopbit beenden das Datentelegramm. Enthält das Datentelegramm einen Auslösebefehl, so reihen sich an die Bits für den Auslösebefehl mehrere CRC-Prüfbits an. Das Antwortsignal auf eine Diagnoseabfrage besteht lediglich aus einigen Stromimpulsen, die durch Kurzschließen der beiden Busleitungen in der betreffenden Datenverarbeitungseinheit erzeugt werden. Bei einer so gebildeten Rückantwort besteht die Gefahr, daß das zentrale Steuergerät diese Rückantwort nicht eindeutig der aussendenden Datenverarbeitungseinheit zuordnen kann und daß außerdem die Rückantwort fehlerhaft ist. Außerdem ist bei einer Rückantwort, die aus nur wenigen Stromimpulsen besteht, keine Differenzierung zwischen verschiedenartigen Rückantworten möglich.

In der DE 35 06 118 A1 ist ein Datenbussystem für Kraftfahrzeuge beschrieben, bei dem für die Datenübertragung zwischen den an den Bus angeschlossenen Stationen Datentelegramme verwendet werden, die einen Kontrollbitbereich, einen Informationsbitbereich und einen Prüfbitbereich aufweisen. Dieser Druckschrift sind keine Hinweise über eine spezielle Behandlung von Auslösesignalen für Rückhaltesysteme bei der Übertragung über einen Bus zu entnehmen.

Der Erfindung liegt die Aufgabe zu Grunde, ein Verfahren der eingangs genannten Art anzugeben, das eine sichere Zuweisung von Abfrage- und Steuersignalen an Datenverarbeitungseinheiten des Bussystems und eine zuverlässige Erfassung von Überwachungsdaten der Datenverarbeitungseinheiten und deren zugeordneten Rückhalteeinrichtungen ermöglicht und Auslöseinformationen den Rückhalteeinrichtungen eindeutig zuordnet.

### Vorteile der Erfindung

Die genannte Aufgabe wird mit den Merkmalen des Patentanspruchs 1 dadurch gelöst, daß die Abfrage- oder Steuersignale und die Antwortsignale Datentelegramme sind, die alle die gleiche Rahmenstruktur aufweisen, bestehend aus einem ersten Bereich mit n Kontrollbits, einem zweiten Bereich mit m Informationsbits und einem dritten Bereich mit p Prüfbits, und daß die zentrale Steuereinheit einen Auslösebefehl in den Bereich der m Informationsbit des Datentelegramms einschreibt, wobei jeder Datenverarbeitungseinheit mindestens eine Bitstelle dieses Bereichs zugeordnet ist und jede einzelne Datenverarbeitungseinheit die ihr zugeordnete(n) Rückhalteeinrichtung(en) nur dann aktiviert, wenn das für sie bestimmte Bit gesetzt ist.

Dadurch, daß alle Datentelegramme, seien es solche, die von der zentralen Steuereinheit ausgesendet, oder solche, die von den Datenverarbeitungseinheiten zurückgesendet werden, gleich strukturiert sind, vereinfacht sich deren Verarbeitung in der zentralen Steuereinheit und in den Datenverarbeitungseinheiten. Da auch die Antwortsignale als vollständige Datentelegramme von den Datenverarbeitungseinheiten an die zentrale Steuereinheit zurückgesendet werden, lassen sich vielfältige Antwortinformationen von den Datenverarbeitungseinheiten mit zuverlässiger Zuordnung zur absendenden Datenverarbeitungseinheit zu der zentralen Steuereinheit übertragen.

Vorteilhafte Weiterbildungen der Erfindung gehen aus den Unteransprüchen hervor.

So können den Datentelegrammen für die Abfrage- oder Steuersignale Synchronisationsbits vorangestellt und Stopbits am Rahmenende hinzugefügt werden. Die Synchronisationsbits erleichtern die Bittaktsynchronisation in den Datenverarbeitungseinheiten.

Die Kontrollbits in den Datentelegrammen der Abfrage- oder Steuersignale dienen zur Unterscheidung verschiedener Abfragen oder Steuerbefehle. Die Datenverarbeitungseinheiten teilen über die Kontrollbits in den Datentelegrammen für Antwortsignale der zentralen Steuereinheit mit, ob sie die Abfragen oder Steuerbefehle korrekt ausführen können oder nicht.

Von den m Informationsbits der Datentelegramme der Abfrage- oder Steuersignale kann ein erster Teil zur Adressierung der Datenverarbeitungseinheiten verwendet werden, und ein zweiter Teil der m Informationsbits kann entweder eine Auswahl eines oder mehrerer Speicherregister in einer adressierten Datenverarbeitungseinheit enthalten, damit der (die) Registerinhalt(e) mit dem Antwort-Telegramm an die zentrale Steuereinheit zurückgesendet wird (werden). Oder der zweite Teil der m Informationsbits kann eine Aufforderung an eine oder mehrere Datenverarbeitungseinheiten enthalten, eine bestimmte Funktion auszuführen. Die Datenverarbeitungseinheiten schreiben die abgefragten Registerinhalte in den aus m Informationsbits bestehenden Bereich ihres Antwort-Telegramms ein.

Der erste Teil der m Informationsbits in einem Abfrage-Telegramm kann entweder die Adresse einer einzelnen von der zentralen Steuereinheit ausgewählten Datenverarbeitungseinheit oder die gleichzeitige Adressierung aller an der Busleitung angeschalteter Datenverarbeitungseinheiten enthalten.

Datentelegramme mit Abfrage- oder Steuersignalen, die eine hohe Priorität und zeitliche Dringlichkeit (wie beispielsweise Auslösebefehle) haben, können mit einem höheren Signalpegel und höherer Bitrate übertragen werden als Datentelegramme mit geringerer Priorität und geringerer zeitlicher Dringlichkeit. Damit ist gewährleistet, daß zumindest das Signal mit der höchsten Priorität, nämlich ein Auslösebefehl, in jedem Fall die betreffenden Datenverarbeitungseinheiten erreicht, auch wenn gerade andere Datentelegramme geringerer Priorität über die Busleitung übertragen werden.

### Beschreibung eines Ausführungsbeispieles

Anhand eines in der Zeichnung dargestellten Ausführungsbeispiels wird nachfolgend die Erfindung näher erläutert. Es zeigen:
Figur 1 ein Blockschaltbild eines Rückhaltesystems,
Figur 2 ein Blockschaltbild einer Datenverarbeitungseinheit und
Figuren 3a, b, c verschiedene Datentelegramme.

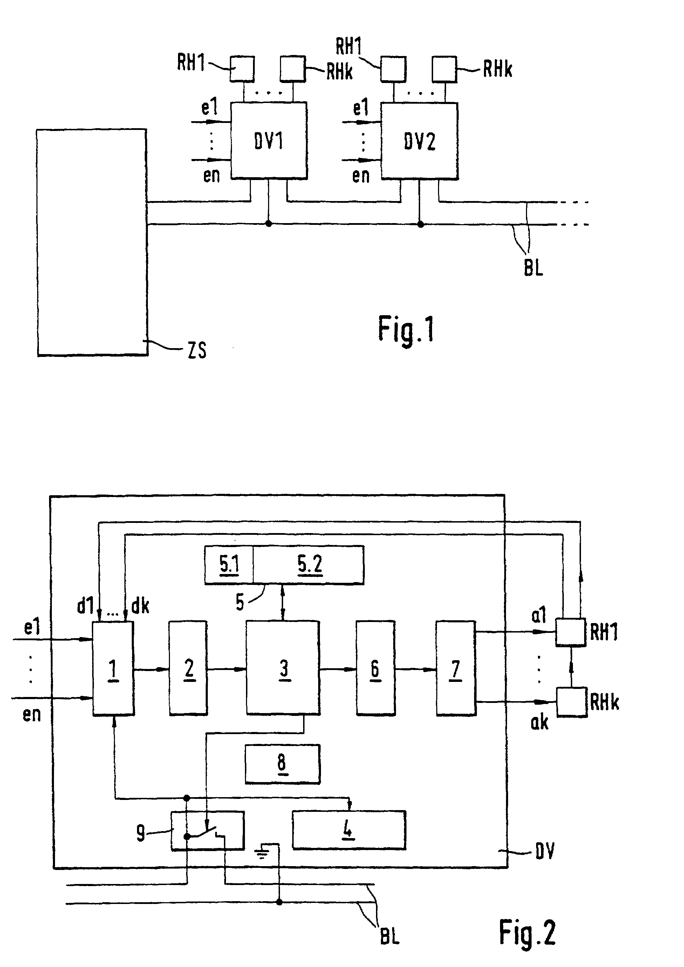

Das in der Figur 1 dargestellte Rückhaltesystem besteht aus einer zentralen Steuereinheit ZS, mit der über eine Busleitung BL mehrere Datenverarbeitungseinheiten DV1, DV2 gekoppelt sind. Jede dieser in der Zeichnung beispielhaft dargestellten zwei Datenverarbeitungseinheiten DV1 und DV2 dient zur Ansteuerung ein oder mehrerer Rückhalteeinrichtungen RH1, ..., RHk. Wie bereits einleitend aufgezählt, gehören zu diesen Rückhalteeinrichtungen RH1, ..., RHk z.B. ein- oder mehrstufig zündbare Fahrer- und Beifahrerairbags, Kniebags, Seitenairbags, Gurtstrammer, usw.. Bei der im Zusammenhang mit Figur 2 noch näher erläuterten Ausführung der Datenverarbeitungseinheiten DV1, DV2 sind neben den Eingängen für die Busleitung BL noch weitere Eingänge e1,..., en für weitere Eingangssignale, z.B. Sensorsignale, vorgesehen.

In dem dargestellten Ausführungsbeispiel hat die Busleitung BL die Form einer Stichleitung, sie kann aber auch als Ringleitung ausgeführt sein.

Alle Datenverarbeitungseinheiten DV1, DV2 besitzen die gleiche Schaltungsstruktur. Deshalb wird stellvertretend für alle Datenverarbeitungseinheiten anhand von Figur 2 eine Datenverarbeitungseinheit DV detailliert beschrieben. An diese Datenverarbeitungseinheit DV sind mehrere Rückhalteeinrichtungen RH1, ..., RHk angeschlossen. Vorzugsweise ist diese Gruppe von k Rückhalteeinrichtungen RH1, ..., RHk einem Fahrzeuginsassen zugeordnet. Handelt es sich z.B. um den Beifahrer, dann könnte zu den Rückhalteeinrichtungen RH1,..., RHk ein Front-Airbag, ein oder zwei Seitenairbags im Kopf- und Thoraxbereich, ein Kniebag und Gurtstrammer gehören, wobei alle Airbags und der Gurtstrammer auch mehrstufig auslösbar sein können. Für jede diese Rückhalteeinrichtung RH1, ..., RHk generiert die Datenverarbeitungseinheit DV im Crash-Fall ein Auslösesignal a1, ..., ak, wobei die Auswahl der auszulösenden Rückhalteeinrichtungen und die Auslösezeitpunkte in Abhängigkeit von mehreren Eingangssignalen e1, ..., en getroffen werden können, wenn beabsichtigt ist, daß die Datenverarbeitungseinheit DV auch unabhängig von Auslösebefehlen der zentralen Steuereinheit ZS aktiv wird. Die Eingangssignale e1, ..., en stammen von Sensoren, zu denen ein oder mehrere das kinetische Verhalten des Fahrzeugs bei einem Crash erfassende Beschleunigungssensoren, Precrashsensoren, Gurtschloßsensoren und Sitzbelegungssensoren gehören können. Aus den Sitzbelegungssensoren leitet die Datenverarbeitungseinheit DV ab, ob der Beifahrersitz überhaupt belegt ist, ob ein Kind oder ein Erwachsener dort sitzt und auch welche Sitzhaltung der Beifahrer hat, so daß dementsprechend nur solche Rückhalteeinrichtungen ausgelöst werden ,die der Person überhaupt einen Schutz bieten können. Ebenso wird die Auslösung der Rückhalteeinrichtungen ganz unterdrückt, wenn der Beifahrersitz gar nicht belegt ist oder sich darauf ein Kindersitz oder Gepäckstück befindet.

In der Figur 2 sind die einzelnen Funktionselemente innerhalb der Datenverarbeitungseinheit DV in Form von Blöcken angedeutet. Es gibt eine Signal-Eingangsschaltung 1 für die Aufnahme analoger oder digitaler Eingangssignale e1, ..., en, welche z.B. Signaltreiber enthält. In der anschließenden Datenaufbereitungsschaltung 2 kann eine Analog-Digital-Umsetzung analoger Eingangssignale erfolgen. In jedem Fall werden hier die Daten so aufbereitet, daß sie von einer nachfolgenden Recheneinheit 3 digital weiterverarbeitet werden können.

Die Recheneinheit 3 erledigt sämtliche Steuerfunktionen in der Datenverarbeitungseinheit DV. Z.B. ermittelt sie aus den Eingangssignalen e1, ..., en, welche der angeschlossenen Rückhalteeinrichtungen RH1, ..., RHk zu welchen Zeitpunkten ausgelöst werden sollen. Oder die Recheneinheit 3 reagiert auf einen Auslösebefehl, den die Datenverarbeitungseinheit DV von der zentralen Steuereinheit ZS empfangen hat. Auch führt die Recheneinheit 3 eine Diagnose der Zündelemente in den Rückhaleeinrichtungen RH1, ..., RHk durch. Dazu werden Diagnosesignale d1, ..., dk - das sind z.B. Widerstandswerte der Zündelemente - der Signal-Eingangsschaltung 1 zugeführt. Die Recheneinheit 3 vergleicht die Diagnosesignale d1, ..., dk mit Referenzwerten und gibt bei unzulässigen Abweichungen eine Fehlermeldung aus. Ebenso wird eine Diagnose einer Energiereserve, die sich in einem Stromversorgungsteil 4 befindet, durchgeführt.

In der Datenverarbeitungseinheit DV ist eine Speichereinheit 5 vorhanden, die sowohl flüchtige Speicherregister (RAM) 5.1 als auch nicht flüchtige Speicherregister (z.B. EPROM, EEPROM, PROM) 5.2 aufweist. In diesen Speicherregistern werden z.B. die Adresse der Datenverarbeitungseinheit DV, Fertigungsdaten - wie z.B. das Fertigungsdatum, die Chargennummer, die ASIC-Version und dergleichen - Diagnosedaten - z.B. Zündelementwiderstände, Energiezustände der Energiereserve - und eventuell noch weitere für den Betrieb der Datenverarbeitungseinheit DV erforderliche Daten abgespeichert. Manche Daten, wie z.B. die Adresse der Datenverarbeitungseinheit DV, werden zunächst in flüchtigen Speicherregistern eingelesen und erst dann in nicht flüchtige Speicherregister übernommen, wenn feststeht, daß die Daten fehlerfrei sind.

Entsprechend der Eingangsseite der Datenverarbeitungseinheit DV folgen ausgangsseitig nach der Recheneinheit 3 eine Datenaufbereitungsschaltung 6 und eine Signal-Ausgangsschaltung 7. In der Datenaufbereitungsschaltung 6 werden z.B. die digitalen Auslöseinformationen oder Diagnoseabfragesignale aus der Recheneinheit 3 in Zündströme oder Prüfströme für die Zündelemente der Rückhalteeinrichtung RH1, ..., RHk umgesetzt. Die Signal-Ausgangsschaltung 7 ist mit Signaltreibern ausgestattet.

Eine in der Datenverarbeitungseinheit DV vorhandene Zeitund Taktbasis 8 versorgt alle Funktionsblöcke mit einem einheitlichen synchronen Takt.

Natürlich ist die in der Figur 2 dargestellte Aufteilung der Funktionsblöcke nicht zwingend. Es können beispielsweise die Signal-Eingangsschaltung 1 und die Datenaufbereitungsschaltung 2 bzw. die Signal-Ausgangsschaltung 3 und die Datenaufbereitungsschaltung 7 miteinander kombiniert und auch teilweise in der Recheneinheit 3 integriert werden. Ebenso können die Stromversorgung 4 und/oder die Zeit- und Taktbasis 8 in den Datenaufbereitungsschaltungen 3, 6 integriert werden. Es sind viele Möglichkeiten gegeben, mehrere Funktionen in einem Schaltblock zusammenzufassen.

Es handelt sich bei der beschriebenen Datenverarbeitungseinheit DV um eine Zündendstufe mit relativ hohem Intelligenzgrad, da sie in Abhängigkeit von Eingangssignalen e1, ..., en autark, d.h. unabhängig von Steuersignalen der zentralen Steuereinheit ZS, über das Auslösen von Rückhalteeinrichtungen RH1, ..., RHk entscheiden kann. Für die Realisierung der erfindungsgemäßen Idee ist es aber nicht erforderlich, daß die Datenverarbeitungseinheiten DV1, DV2 autarke Entscheidungsfunktion haben. Nachfolgend wird von Datenverarbeitungseinheiten ausgegangen, die Auslösebefehle und Diagnoseanforderungen von der zentralen Steuereinheit ZS erhalten.

Jede Datenverarbeitungseinheit besitzt einen sogenannten Längsschalter 9, mit dessen Hilfe sie die Busleitung BL auftrennen oder durchschalten kann. Der Längsschalter 9 wird von der Recheneinheit 3 gesteuert. Dabei kann eine Aufforderung zum Schließen oder Öffnen des Längsschalters 9 von der zentralen Steuereinheit ZS über die Busleitung BL übertragen werden. Somit ist es möglich, einen Kurzschluß auf der Busleitung unwirksam zu machen, indem der Längsschalters 9 der vor dem Kurzschluß liegenden Datenverarbeitungseinheit geöffnet wird. Auch kann über die Längsschalter eine gewisse Selektion ansprechbarer Datenverarbeitungseinheiten vorgenommen werden.

Die zentrale Steuereinheit ZS sendet an die Datenverarbeitungseinheiten DV1, DV2 Abfrage- oder Steuersignale aus, und die angesprochenen Datenverarbeitungseinheiten senden auf manche Abfragesignale Antwortsignale an die zentrale Steuereinheit ZS zurück. Dabei ist es möglich, an alle an der Busleitung BL angeschlossenen Datenverarbeitungseinheiten DV1, DV2 gleichzeitig Abfrage- oder Steuersignale zu senden oder selektiv an einzelne Datenverarbeitungseinheiten DV1, DV2 Abfrage- oder Steuersignale zu richten.

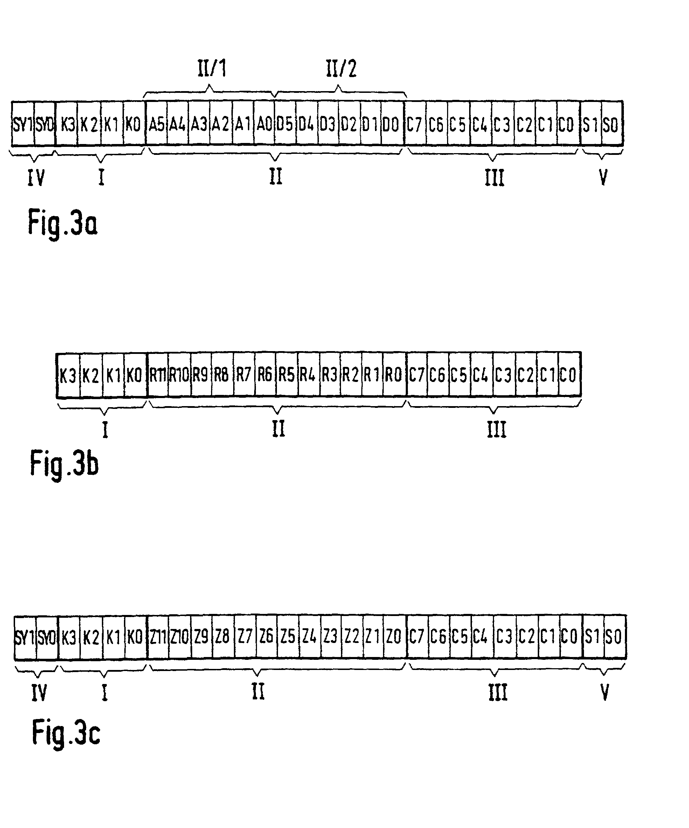

Die von der zentralen Steuereinheit ZS ausgesendeten Abfrage- oder Steuersignale und die Antwortsignale der Datenverarbeitungseinheiten DV1, DV2 sind Datentelegramme, die alle die gleiche Rahmenstruktur aufweisen, wie in den Figuren 3a, 3b und 3c dargestellt ist. Diese Rahmenstruktur besteht aus einem ersten Bereich I mit n Kontrollbits, einem zweiten Bereich II mit m Informationsbits und einem dritten Bereich III mit p Prüfbits. In den von der zentralen Steuereinheit ZS ausgesendeten Datentelegrammen geben die Kontrollbits K0 bis K3 die Art des Abfrage-Steuersignals an - z.B. Auslösebefehl, Diagnoseabfrage, Speicherregisterabfrage usw.. Im Antwort-Telegramm machen die Datenverarbeitungseinrichtungen mit den Kontrollbits K1 bis K3 kenntlich, ob sie den an sie gerichteten Abfrageoder Steuerbefehl korrekt ausführen können oder nicht. Die p Prüfbits im Bereich 3 der Datentelegramme sind CRC-Prüfbits (Cyclic Redundancy Check), welche das im Bereich II eingeschriebene Bitmuster auf Fehler überprüfen.

Den von der zentralen Steuereinheit ZS ausgehenden Datentelegrammen (Figur 3a, Figur 3c) ist der beschriebenen Rahmenstruktur noch ein Bereich IV mit Synchronisationsbits SY0, SY1 vorangestellt und ein Bereich V mit einigen Stopbits S0, S1 am Rahmenende hinzugefügt. Die beiden Bitbereiche IV und V entfallen bei einem von den Datenverarbeitungseinheiten DV1, DV2 ausgesendeten Antwort-Telegramm (Figur 3b). Die Synchronisationsbits SY0 und SY1 in den von der zentralen Steuereinheit ZS an die Datenverarbeitungseinheiten DV1, DV2 ausgesendeten Datentelegrammen (Figur 3a, Figur 3c) dienen dazu, in den Datenverarbeitungseinheiten eine Zeit- und Taktbasis auf die Abtastfrequenz der zentralen Steuereinheit ZS zu synchronisieren. Die Stopbits S0 und S1 am Ende des Datenrahmens für die Abfrage- oder Steuersignale geben den Datenverarbeitungseinheiten DV1, DV2 vor, daß sie im Anschluß an diese Stopbits S0, S1 ihr Antwort-Telegramm an die zentrale Steuereinheit ZS zurücksenden bzw. in dieser Zeit Aktionen ausführen können, deren Ergebnis unmittelbar danach gesendet werden kann.

Nachfolgend sollen einige Beispiele für Datentelegramme von Abfrage- oder Steuersignalen und von Antwortsignalen näher beschrieben werden:

Wenn die zentrale Steuereinheit ZS von einer bestimmten Datenverarbeitungseinheit DV1, DV2 den Inhalt eines ausgewählten Speicherregisters abfragen will, sendet sie ein Abfrage-Telegramm gemäß Figur 3a aus, in dessen Bereich II, und zwar in einem Teil II/1 mit den Bits A0 bis A5, sie die Adresse der angesprochenen Datenverarbeitungseinheit einschreibt. Die Bits D0 bis D5 des Teils II/2 des Bereichs II des Datenrahmens der Figur 3a erhalten die Adresse des abgefragten Speicherregisters. In dem Bereich II mit den Bits R0 bis R11 des Antwort-Telegramms schreibt die angesprochene Datenverarbeitungseinheit den Inhalt des abgefragten Speicherregisters ein.

Fordert die zentrale Steuereinheit ZS eine ausgewählte Datenverarbeitungseinheit auf, eine Eigendiagnose durchzuführen, so schreibt sie wiederum in die Bits A0 bis A5 des Bereichs II/1 ihres Datentelegramms die Adresse der ausgewählten Steuereinheit und in die Bits D0 bis D5 des Bereichs II/2 eine fest vorgegebene Bitkombination, welche für alle Datenverarbeitungseinheiten gleich ist, ein. Diese fest vorgegebene Bitkombination D0 bis D5 erkennt jede Datenverarbeitungseinheit dann als Aufforderung, eine Eigendiagnose durchzuführen. Bei der nächsten Diagnose-Anforderung, welche die Datenverarbeitungseinheit von der zentralen Steuereinheit aus erhält, sendet sie in ihrem Antwort-Telegramm das Diagnoseergebnis zurück. Dabei entspricht jedes Bit dem Ergebnis eines Diagnoseschritts. Zu diesen Diagnosenschritten gehört beispielsweise der Zustand des Längsschalters, oder der Widerstand des Zündelements einer Rückhalteeinrichtung oder der Energiezustand der Energiereserve oder die Zustände verschiedener anderer Schaltungselemente in der Datenverarbeitungseinheit und dgl..

Soll von der zentralen Steuereinheit aus in ein bestimmtes Register einer bestimmten Datenverarbeitungseinheit eine Information eingeschrieben werden, so teilt sie der betreffenden Datenverarbeitungseinheit in ihrem Abfrage-Telegramm in den Bits A0 bis A5 die Adresse der angesprochenen Datenverarbeitungseinheit und in den Bits D0 bis D5 die Adresse des Speicherregisters mit, in das mit den nächsten Datentelegramm die Information eingeschrieben werden soll. Das Antwort-Telegramm der Datenverarbeitungseinheit enthält im Bereich II als Bestätigung die ausgewählte Registeradresse. Im nächsten von der zentralen Steuereinheit ausgehenden Datentelegramm befindet sich nun im Bereich II/2 die Information, welche in das zuvor ausgewählte Speicherregister eingeschrieben werden soll. Als Bestätigung sendet die Datenverarbeitungseinheit in ihrem Antwort-Telegramm über die Bits R0 bis R11 die Adresse des betreffenden Speicherregisters und die darin eingeschriebene Information zurück.

Es gibt verschiedene Arbeits-Moden für die Datenverarbeitungseinheiten DV1, DV2. Dazu gehört ein Normal-Mode, ein Einzel-Mode und ein Halte-Mode. Im normalen Betrieb, d.h. während des normalen Fahrbetriebs des Fahrzeugs, befinden sich die Datenverarbeitungseinheiten im Normal-Mode. Wenn zuvor ein Reset der Datenverarbeitungseinheiten stattgefunden hat, befinden sich alle Datenverarbeitungseinheiten im Normal-Mode. Auch die zentrale Steuereinheit kann alle Datenverarbeitungseinheiten dadurch in den Normal-Mode setzen, indem sie an alle Datenverarbeitungseinheiten gleichzeitig ein Broadcast-Datentelegramm aussendet. In diesem Fall sind alle Bits AO bis A5 und D0 bis D5 im Bereich II des Datentelegramms mit einer festen Bitkombination belegt. Ein Antwort-Telegramm von Seiten der Datenverarbeitungseinrichtungen entfällt bei einem Broadcast-Steuersignal.

Über den Einzel-Mode läßt sich nur eine Datenverarbeitungseinheit an der Busleitung isolieren. Im Einzel-Mode öffnet die betreffende Datenverarbeitungseinheit ihren Längsschalter, so daß der Daten- und Versorgungsstrom in dieser Datenverarbeitungseinheit unterbrochen wird. Der Einzel-Mode läßt sich aus dem Normal-Mode heraus einstellen. Der Einzel-Mode dient in erster Linie der Ermittlung des Ist-Zustandes auf der Busleitung. Zur Aktivierung des Einzel-Modes wird die Adresse der ausgewählten Datenverarbeitungseinheit in die Bits A0 bis A5 eingeschrieben und die Bits D0 bis D5 erhalten ein fest vorgegebenes Bitmuster, das jede Datenverarbeitungseinheit als Aufforderung, den Einzel-Mode zu aktivieren, versteht. Ein Antwort-Telegramm sendet die betroffene Datenverarbeitungseinheit nicht zurück.

Im Halte-Mode arbeitet die Datenverarbeitungseinheit wie im Normal-Mode. Der Unterschied zum Normal-Mode besteht darin, daß sie im Halte-Mode einen Befehl der zentralen Steuereinheit, den Einzel-Mode zu aktivieren, ablehnt. Als Bestätigung dafür, daß sie den Halte-Mode - aktiviert hat, sendet die Datenverarbeitungseinheit in ihrem Antwort-Telegramm über die Bits R0 bis R11 ihre Adresse mit.

Wie bereits oben erwähnt, enthält die Speichereinheit 5 jeder Datenverarbeitungseinheit DV einen flüchtigen Speicherbereich RAM und einen nicht flüchtigen Speicherbereich. Am Bandende stellt die zentrale Steuereinheit die Anzahl der eingebauten Datenverarbeitungseinheiten fest und baut sukzessiv die Busleitung mit den daran angeschlossenen Datenverarbeitungseinheit über RAM-Adressen auf. Erst wenn der RAM-Betrieb fehlerfrei ist, schaltet es einzeln jede Datenverarbeitungseinheit in den Einzel-Mode und fordert mit diesem Befehl die Programmierung der Adressen in entsprechende flüchtige Speicher-Register an. Diesen Befehl, die flüchtigen Speicher-Register zu schreiben, erteilt die zentrale Steuereinheit an jede einzelne Datenverarbeitungseinheit über ein Steuer-Telegramm gemäß Figur 3a, bei dem die Bits A0 bis A5 die Adresse der betreffenden Datenverarbeitungseinheit enthalten und die Bits D0 bis D5 mit einem festen Bitmuster versehen werden, das für den Befehl "flüchtige Speicher-Register schreiben" steht. Ein Antwort-Telegramm seitens der Datenverarbeitungseinheit entfällt hier.

Sollte die normale Stromversorgung zusammenbrechen, so wird in der zentralen Steuereinheit auf einen Notbetrieb umgeschaltet, d.h. die Datenverarbeitungseinheiten erhalten ihre Versorgungsspannung aus der Batteriespannung des Fahrzeugs. Damit alle Datenverarbeitungseinheiten auf diese neue Versorgungsspannung während des Notbetriebs umschalten, sendet die zentrale Steuereinheit ein Steuer-Telegramm für den Notbetrieb an alle Datenverarbeitungseinheiten gleichzeitig aus. Es handelt sich hier um ein Broadcast-Datentelegramm, bei dem die Bits A1 bis A5 und D0 bis D5 ein fest vorgegebenes Bitmuster erhalten. Antwort-Telegramme seitens der Datenverarbeitungseinheiten entfallen.

In einem Crash-Fall des Fahrzeugs sendet die zentrale Steuereinheit ZS in Abhängigkeit diverser Sensorsignale einen Auslösebefehl an all diejenigen Datenverarbeitungseinheiten aus, deren zugeordnete Rückhalteeinrichtungen ausgelöst werden müssen. Das in Figur 3c dargestellte Datentelegramm eines Auslösebefehls enthält im Bereich II die Bits Z0 bis Z11. Von diesen Bits Z0 bis Z11 sind jeder einzelnen Datenverarbeitungseinheit eine oder auch mehrere Bitstellen zugeordnet. Wenn nun dieses Datentelegramm über die Busleitung ausgesendet wird, fragt jede Datenverarbeitungseinheit die ihr zugeordnete Bitstelle bzw. Bitstellen Z0 bis Z11 ab und veranlaßt eine Auslösung des bzw. der zu ihr gehörenden Rückhalteeinrichtungen RH1,..., RHk, wenn das bzw. die ihr zugeordneten Bits gesetzt sind. Ein Antwort-Telegramm der Datenverarbeitungseinheiten entfällt.

Um sicherzustellen, daß ein Auslösebefehl, auch wenn gerade andere Datentelegramme über die Busleitung übertragen werden, mit Sicherheit die Datenverarbeitungseinrichtungen erreicht, wird das Datentelegramm eines Auslösebefehls mit einem höheren Signalpegel und mit höherer Bitrate übertragen als andere Datentelegramme, die eine geringere Priorität und eine geringere zeitliche Dringlichkeit als ein Auslösebefehl haben. Generell gilt, daß Datentelegramme mit Abfrage- oder Steuersignalen, die eine hohe Priorität und hohe zeitliche Dringlichkeit haben, mit einem höheren Signalpegel und mit höherer Bitrate übertragen werden als Datentelegramme mit geringerer Priorität und geringerer zeitlicher Dringlichkeit.

## Patentansprüche

1. Verfahren zur Datenübertragung in einem über eine Busleitung vernetzten Rückhaltesystem für Fahrzeuginsassen, wobei an die Busleitung (BL) eine zentrale Steuereinheit (ZS) und mehrere Datenverarbeitungseinheiten (DV1, DV2) angekoppelt sind, welche zur Ansteuerung von Rückhalteeinrichtungen (RH1, ..., RHk) an verschiedenen Orten im Fahrzeug vorgesehen sind, und wobei die zentrale Steuereinheit (ZS) an alle oder einzelne Datenverarbeitungseinheiten (DV1, DV2) Abfrage- oder Steuersignale in Form von Datentelegrammen aussendet und die Datenverarbeitungseinheiten (DV1, DV2) auf bestimmte Abfrage- oder Steuersignale Antwortsignale an die zentrale Steuereinheit (ZS) zurücksenden, **dadurch gekennzeichnet, daß** die Abfrage- oder Steuersignale und die Antwortsignale Datentelegramme sind, die alle die gleiche Rahmenstruktur (I, II, III) aufweisen, bestehend aus einem ersten Bereich (I) mit n Kontrollbits, einem zweiten Bereich (II) mit m Informationsbits und einem dritten Bereich (III) mit p Prüfbits, und daß die zentrale Steuereinheit (ZS) einen Auslösebefehl in den Bereich (II) der m Informationsbits des Datentelegramms einschreibt, wobei jeder Datenverarbeitungseinheit (DV1, DV2) mindestens eine Bitstelle (Z0, ..., Z11) dieses Bereichs zugeordnet ist und jede einzelne Datenverarbeitungseinheit (DV1, DV2) die ihr zugeordnete(n) Rückhalteeinrichtung(en) (RH1, ..., RHk) nur dann aktiviert, wenn das für sie bestimmte Bit gesetzt ist.

2. Verfahren nach Anspruch 1, **dadurch gekennzeichnet, daß** den Datentelegrammen für die Abfrage- oder Steuersignale Synchronisationsbits (SY0, SY1) vorangestellt und Stopbits (S0, S1) am Rahmenende hinzugefügt werden.

3. Verfahren nach Anspruch 1, **dadurch gekennzeichnet, daß** die Kontrollbits (K0, ..., K3) in den Datentelegrammen der Abfrage- oder Steuersignale zur Unterscheidung verschiedener Abfragen- oder Steuerbefehle dienen.

4. Verfahren nach Anspruch 1, **dadurch gekennzeichnet, daß** die Datenverarbeitungseinheiten (DV1, DV2) über die Kontrollbits (K0, ..., K3) in den Datentelegrammen für Antwortsignale der zentralen Steuereinheit (ZS) mitteilen, ob sie die Abfragen oder Steuerbefehle korrekt ausführen können oder nicht.

5. Verfahren nach Anspruch 1, **dadurch gekennzeichnet, daß** von den m Informationsbits der Datentelegramme der Abfrageoder Steuersignale ein erster Teil (II/1) zur Adressierung der Datenverarbeitungseinheiten (DV1, DV2) verwendet wird und daß ein zweiter Teil (II/2) der m Informationsbits entweder eine Auswahl eines oder mehrerer Speicherregister in einer adressierten Datenverarbeitungseinheit (DV1, DV2) enthält, damit der (die) Registerinhalt(e) mit dem Antwort-Telegramm an die zentrale Steuereinheit (ZS) zurückgesendet wird (werden), oder eine Aufforderung an eine oder mehrere Datenverarbeitungseinheiten (DV1, DV2) enthält, eine bestimmte Funktion auszuführen.

6. Verfahren nach Anspruch 5, **dadurch gekennzeichnet, daß** die Datenverarbeitungseinheiten (DV1, DV2) die abgefragten Registerinhalte in den aus m Informationsbits bestehenden Bereich (II) ihres Antwort-Telegramms einschreiben.

7. Verfahren nach Anspruch 5, **dadurch gekennzeichnet, daß** der erste Teil (II/1) der m Informationshits entweder die Adresse einer einzelnen von der zentralen Steuereinheit (ZS) ausgewählten Datenverarbeitungseinheit (DV1, DV2) oder die gleichzeitige Adressierung aller an der Busleitung (BL) angeschalteter Datenverarbeitungseinheiten (DV1, DV2) enthält.

8. Verfahren nach einem der vorhergehenden Ansprüche, **dadurch gekennzeichnet, daß** Datentelegramme mit Abfrage- oder Steuersignalen, die eine hohe Priorität und hohe zeitliche Dringlichkeit - beispielsweise Auslösebefehle - haben, mit einem höheren Signalpegel und mit höherer Bitrate übertragen werden als Datentelegramme mit geringerer Priorität und geringerer zeitlicher Dringlichkeit - beispielsweise Diagnosesignale.

## Claims

1. Method of transmitting data in a restraint system, networked via a busline, for vehicle occupants, a central control unit (ZS) and a plurality of data processing units (DV1, DV2) which are provided for actuating restraint devices (RH1, ..., RHk) at various locations in the vehicle being coupled to the busline (BL), and the central control unit (ZS) outputting to all, or to individual data processing units (DV1, DV2), interrogation or control signals in the form of data telegrams and the data processing units, (DV1, DV2) transmitting back response signals to the central control unit (ZS) in response to specific interrogation or control signals, **characterized in that** the interrogation or control signals and the response signals are data telegrams which all have the same frame structure (I, II, III) composed of a first region (I) with n checkbits, a second region (II) with m informationbits and a third region (III) with p checkbits, and **in that** the central control unit (ZS) relates an initiate instruction into the region (II) of the m informationbits of the data telegram, each data processing unit (DV1, DV2) being assigned at least one bit face (Z0, ..., Z11) of this region, and each individual data processing unit (DV1, DV2) activating the restraint device or devices (RH1, ..., RHk) assigned to it only if the bit which is determined for it is set.

2. Method according to Claim 1, **characterized in that** synchronizationbits (SY0, SY1) are placed in front of the data telegrams for the interrogation or control signals, and stopbits (S0, S1) are added at the frame end.

3. Method according to Claim 1, **characterized in that** the checkbits (K0, ..., K3) in the data telegrams of the interrogation or control signals serve to differentiate between different interrogation -or control instructions.

4. Method according to Claim 1, **characterized in that** the data processing units (DV1, DV2) inform the central control unit (ZS) via the checkbits (KO, ..., K3) in the data telegrams for response signals, whether or not they can correctly carry out the interrogations or control instructions.

5. Method according to Claim 1, **characterized in that** a first portion (II/1) of the m informationbits of the data telegrams of the interrogation or control signals is used to address the data processing units DV1, DV2), and **in that** a second portion (II/2) of the m informationbits either contains a selection of one or more storage registers in an addressed data processing unit (DV1, DV2) so that the content of the register or registers is transmitted back to the central control unit (ZS) with the response telegram, or contains a request to one or more data processing units (DV1, DV2) to carry out a specific function.

6. Method according to Claim 5, **characterized in that** the data processing units (DV1, DV2) write the interrogated register contents into that region (II) of their response telegram which is composed of m informationbits.

7. Method according to Claim 5, **characterized in that** the first portion (II/1) of the m informationbits either contains the address of an individual data processing unit (DV1, DV2) selected from the central control unit (ZS), or the simultaneous addressing of all the data processing units (DV1, DV2) connected to the busline (BL).

8. Method according to one of the preceding claims, **characterized in that** data telegrams with interrogation or control signals which have a high priority and high urgency in terms of time - for example initiation instructions - are transmitted with a higher signal level and a higher bitrate than data telegrams with a lower priority and a lower urgency in terms of time - for example diagnostic signals.

## Revendications

1. Procédé de transmission de données dans un système de retenue des passagers d'un véhicule, branché en réseau par un bus,
une unité de commande centrale (ZS) et plusieurs unités de traitement de données (DV1, DV2) étant reliées au bus (BL), pour commander des installations de retenue (RH1...RHk) en différents emplacements du véhicule, dont l'unité de commande centrale (ZS) émet vers toutes ou certaines unités de traitement de données (DV1, DV2), des signaux d'interrogation et de commande sous la forme de télégrammes de données, et dont les unités de traitement de données (DV1, DV2) renvoient des signaux de réponse à certains signaux d'interrogation et de commande vers l'unité de commande centrale (ZS),
**caractérisé en ce que**
les signaux d'interrogation ou de commande et les signaux de réponse sont des télégrammes de données ayant tous la même structure de trame (I, II, III) composée d'une première zone (I) avec (n) bits de contrôle, une seconde zone (II) avec (m) bits d'informations et une troisième zone avec (III) avec (p) bits de vérification, et l'unité de commande centrale (ZS) inscrit un ordre de déclenchement dans la zone (II) des (m) bits d'informations du télégramme de données, chaque unité de traitement de données (DV1, DV2) comportant au moins une position de bits (Z0...Z11) associée à cette zone, et chacune des unités de traitement de données (DV1, DV2) n'active la ou les unités de retenue (RH1...RHk) qui lui sont associées que si le bit qui leur correspond est mis à l'état.

2. Procédé selon la revendication 1,
**caractérisé en ce que**
l'on ajoute au télégramme de données des bits de synchronisation (SYO, SY1) devant les signaux d'interrogation ou de commande et des bits d'arrêt (S0, S1) à la fin de la trame.

3. Procédé selon la revendication 1,
**caractérisé en ce que**
les bits de contrôle (K0...K3) dans les télégrammes de données des signaux d'interrogation ou de commande servent à distinguer différents ordres d'interrogation ou de commande.

4. Procédé selon la revendication 1,
**caractérisé en ce que**
les unités de traitement de données (DV1, DV2) communiquent par les bits de contrôle (K0...K3) contenus dans les télégrammes de données pour les signaux de réponse de l'unité de commande centrale (ZS), si elles ont pu ou non exécuter correctement les interrogations ou les ordres de commande.

5. Procédé selon la revendication 1,
**caractérisé en ce que**
parmi les (m) bits d'informations du télégramme de données d'un signal d'interrogation ou de commande, une première partie (II/1) est utilisée pour l'adressage des unités de traitement de données (DV1, DV2) et une seconde partie (II/2) des (m) bits d'informations contient soit une sélection d'un ou plusieurs registres de mémoire dans une unité de traitement de données adressée (DV1, DV2) pour que le ou les contenus de registres puissent être renvoyés avec le télégramme de réponse à l'unité de commande centrale (ZS), soit une requête pour une ou plusieurs unités de traitement de données (DV1, DV2) pour exécuter une certaine fonction.

6. Procédé selon la revendication 5,
**caractérisé en ce que**
les unités de traitement de données (DV1, DV2) inscrivent les contenus de registres interrogés dans la zone (II) de leurs télégramme de réponse, zone qui est formée des (m) bits d'informations.

7. Procédé selon la revendication 5,
**caractérisé en ce que**
la première partie (II/1) des (m) bits d'informations contient soit l'adresse d'une seule des unités de traitement de données (DV1, DV2) sélectionnée par l'unité de commande centrale (ZS) soit l'adresse simultanée de toutes les unités de traitement de données (DV1, DV2) branchée sur le bus (BL).

8. Procédé selon l'une quelconque des revendications précédentes,
**caractérisé en ce que**
les télégrammes de données ayant des signaux d'interrogation ou de commande de priorité élevée et d'urgence élevée (par exemple des ordres de déclenchement), sont transmis avec un niveau de signal plus élevé et une vitesse de bits plus élevée que dans les télégrammes de données de moindre priorité et de moindre urgence, par exemple les signaux de diagnostic.
